# FASCICULE DE BREVET EUROPEEN

(11) **EP 4 182 183 B1**
(45) Date de publication et mention de la délivrance du brevet: **30.07.2025**
(21) Numéro de dépôt: 21806787.4
(22) Date de dépôt: 22.09.2021
(51) Int. Cl.: B60N 2/01

(54) **STRUCTURE DE SIÈGES POUR VÉHICULE AUTOMOBILE A 2, 3 OU 4 SIÈGES**
SITZSTRUKTUR FÜR EIN KRAFTFAHRZEUG MIT 2, 3 ODER 4 SITZEN
SEAT STRUCTURE FOR A MOTOR VEHICLE WITH 2, 3 OR 4 SEATS

(30) Priorité: 24.09.2020 FR 2009742
(43) Date de publication de la demande: 24.05.2023
(73) Titulaire: Celle, Jean, 43260 Saint-Pierre-Eynac (FR); Raveleau, Sylvain, 38680 Saint Just de Claix (FR); Celle, Christophe, Broomfield Midleton Cork (IE); Celle, Ludovic, 68040 Oaxaca de Juarez (MX); Celle, Yann, 43000 Le Puy en Velay (FR)
(72) Inventeur: Celle, Jean, 43260 Saint-Pierre-Eynac (FR); Raveleau, Sylvain, 38680 Saint Just de Claix (FR); Celle, Christophe, Broomfield Midleton Cork (IE); Celle, Ludovic, 68040 Oaxaca de Juarez (MX); Celle, Yann, 43000 Le Puy en Velay (FR)
(74) Mandataire: Ipsilon Lyon
(86) Numéro de dépôt international: PCT/FR2021/051626
(87) Numéro de publication internationale: WO 2022/064139

(56) Documents cités:
- EP-A2- 1 614 581
- WO-A1-2020/152514
- US-A1- 2007 241 235
- US-A1- 2015 102 641
- US-B2- 8 807 262

## Description

### Domaine technique

La présente invention se rapporte au domaine technique des structures pour véhicule automobile destinées à former des sièges. Plus précisément, la structure selon l'invention définit 2, 3 ou 4 sièges.

### Art antérieur

Dans les environnements urbains, les véhicules automobiles compacts ont un succès indéniable du fait, en autres, de l'encombrement de la circulation, du manque d'emplacements de stationnement, et du fait de la nécessité de disposer de véhicules automobiles économes en énergie par le biais d'un véhicule automobile plus léger.

Il existe des véhicules automobiles dédiés spécifiquement au milieu urbain et occupés seulement par un conducteur. La possibilité d'une utilisation variée pour véhiculer des passagers et/ou des chargements, tels que des bagages, des marchandises ou encore des encombrants est régulièrement un critère au moment du choix de l'achat d'un véhicule automobile. Un véhicule compact à seulement deux places est parfois insuffisant.

Les automobiles électriques sont une solution pour la réduction de la pollution de l'air et de la pollution sonore dans les environnements urbains. Elles sont particulièrement adaptées pour les trajets entre le domicile et le travail de beaucoup d'automobilistes utilisant des automobiles compactes en milieu essentiellement urbain.

La chaîne de traction électrique présente l'avantage d'un faible encombrement ce qui est important pour les véhicules compacts dans lesquels l'habitacle doit accueillir plusieurs occupants et/ou quelques bagages. Les difficultés sont grandes pour concevoir une cellule habitable répondant à ces critères dans un véhicule très compact.

En outre, les économies d'énergie qui deviennent de plus en plus nécessaires sont favorisées par un bon aérodynamisme, en particulier pour un véhicule pouvant être utilisé sur des autoroutes périurbaines.

De plus, les véhicules automobiles compacts souffrent de manière générale d'une mauvaise ergonomie pour le conducteur car le passage de roue avant fait intrusion dans l'habitacle. C'est le cas aussi bien pour les véhicules automobiles à conduite à gauche, que pour ceux à conduite à droite.

Il est connu par exemple les documents WO2020/152514, US8807262, US2015/102641 qui décrivent des conceptions de sièges selon l'art antérieur, mais qui présentent encore les inconvénients précités.

Il existe donc un besoin de créer un véhicule plus compact, moins lourd afin de réduire la consommation énergétique d'un tel véhicule automobile.

### Exposé de l'invention

L'un des buts de l'invention est donc de proposer une structure compacte et légère de sièges d'un habitacle de véhicules automobiles, afin de réduire la consommation énergétique du véhicule.

Un autre objectif de l'invention est de fournir une telle structure dont le coût de fabrication est réduit, et dont la solidité est accrue tout en offrant un champ visuel amélioré pour le conducteur.

Un autre objectif de l'invention est de fournir un véhicule automobile plus compact, plus léger et plus aérodynamique.

À cet effet, il a été mis au point une structure de sièges pour véhicule automobile définissant un siège conducteur et au moins un siège passager. selon les revendications.

Selon l'invention, le siège conducteur et le au moins un siège passager sont décalés et imbriqués l'un par rapport à l'autre selon les trois dimensions.

On entend par l'expression « selon les trois dimensions », le fait que le siège conducteur et le siège passager sont décalés en hauteur, largueur et longueur. En d'autres termes, les sièges sont décalés selon les axes x, y et z d'un repère orthonormé.

De cette manière, le décalage vertical des structures de sièges permet de rapprocher les sièges en les imbriquant les uns dans les autres, c'est-à-dire en les faisant en partie se chevaucher, ce qui donne à la structure un volume plus compact, ce qui rend le véhicule moins lourd et réduit par conséquent sa consommation d'énergie.

Bien entendu, une telle structure permet au conducteur, dans un environnement urbain de trouver plus aisément de la place pour se garer.

Selon une forme de réalisation particulière, le siège conducteur est surélevé par rapport à l'au moins un siège passager.

Cette disposition du siège conducteur permet de procurer une vision avant sur une plus longue distance, notamment sur des routes avec des changements de pente, ainsi qu'un champ de vision latéral amélioré.

Selon une forme de réalisation particulière, la structure définit deux sièges passagers décalés et imbriqués par rapport au siège conducteur selon les trois dimensions

De préférence, les deux sièges passagers sont alignés en hauteur et en longueur.

Selon une autre forme de réalisation, la structure définit trois sièges passagers, dont un premier siège passager aligné en hauteur et en longueur par rapport au siège conducteur. De plus, un deuxième siège passager et un troisième siège passager sont décalés par rapport au siège conducteur et au premier siège passager selon les trois dimensions, et lesdits deuxième et troisième sièges passagers sont alignés l'un par rapport à l'autre en hauteur et en longueur, les deuxième et troisième sièges passagers sont respectivement imbriqués par rapport au siège conducteur et au premier siège passager.

Selon un autre mode de réalisation, la structure définit trois sièges passagers, dont un premier siège passager aligné en hauteur et décalé en arrière par rapport au siège conducteur. De plus, un deuxième siège passager et un troisième siège passager sont décalés par rapport au siège conducteur et au premier siège passager selon les trois dimensions, et lesdits deuxième et troisième sièges passagers sont alignés l'un par rapport à l'autre en hauteur et en longueur, le premier siège passager et le deuxième siège passager étant imbriqués dans le siège conducteur, et le troisième siège passager étant imbriqué dans le premier siège passager.

Dans un mode de réalisation supplémentaire, la structure définit trois sièges passagers, le siège conducteur et les trois sièges passagers étant tous décalés les uns par rapport aux autres selon les trois dimensions, le premier siège passager et le deuxième siège passager étant imbriqués dans le siège conducteur, et le troisième siège passager étant imbriqué dans le premier siège passager.

Selon l'invention, la structure selon l'invention comprend des montants destinés à s'étendre jusqu'à un toit du véhicule automobile et adossés à chaque structure de siège.

De cette manière, les montants permettent d'améliorer la rigidité de la structure, notamment en évitant l'écrasement, ce qui permet d'améliorer la sécurité des passagers.

Selon l'invention, la structure comprend des coques définissant les sièges, lesdites coques comprenant des parois latérales et transversales délimitant une zone repose pied, une zone d'assise, une zone d'appui dorsale et une zone d'appui-tête.

Ainsi, de telles coques assurent une protection supplémentaire des passagers.

L'invention porte également sur un véhicule automobile comprenant une structure telle que précitée.

Selon un mode de réalisation particulier le véhicule comprend des roues motorisées. C'est-à-dire qu'elles intègrent un moteur électrique.

De préférence, les roues qui se trouvent d'un côté du véhicule sont décalées longitudinalement par rapport aux roues qui se trouvent d'un autre côté du véhicule afin d'améliorer le confort de passage des ralentisseurs transversaux surélevés.

### Brève description des dessins

D'autres avantages et caractéristiques ressortiront mieux de la description qui va suivre, donnée à titre d'exemple non limitatif, du dispositif selon l'invention, à partir des dessins annexés dans lesquels :
[Fig. 1] est une vue en perspective du dessus de la structure pour véhicule automobile de réception d'un siège conducteur et du siège passager selon l'invention.
[Fig. 2] est une vue similaire de la figure 1, illustrant la structure de côté.
[Fig. 3] est une vue similaire de la figure 1, illustrant la structure vue de face.
[Fig. 4] est une vue du dessus de la structure selon un mode de réalisation comprenant deux sièges passagers
[Fig. 5] est une vue similaire à la figure 4, illustrant la structure en perspective.
[Fig. 6] est une vue similaire de la figure 4, illustrant la structure vue de face.
[Fig. 7] est une vue similaire à la figure 4, illustrant la structure de derrière.
[Fig. 8] est une vue similaire à la figure 4, illustrant la structure de côté.
[Fig. 9] est une vue du dessus de la structure selon un mode de réalisation comprenant trois sièges passagers.
[Fig. 10] est une vue similaire de la figure 9, illustrant la structure en perspective.
[Fig. 11] est une vue similaire de la figure 9, illustrant la structure de face.
[Fig. 12] est une vue du dessus de la structure selon un autre mode de réalisation comprenant trois sièges passagers.
[Fig. 13] est une vue similaire de la figure 12, illustrant la structure en perspective.
[Fig. 14] est une vue similaire de la figure 12, illustrant la structure de face.
[Fig. 15] est une est une vue du dessus de la structure selon un autre mode de réalisation comprenant trois sièges passagers.
[Fig. 16] est une vue similaire de la figure 15, illustrant la structure en perspective.
[Fig. 17] est une vue similaire de la figure 15, illustrant la structure de face.

### Description détaillée de l'invention

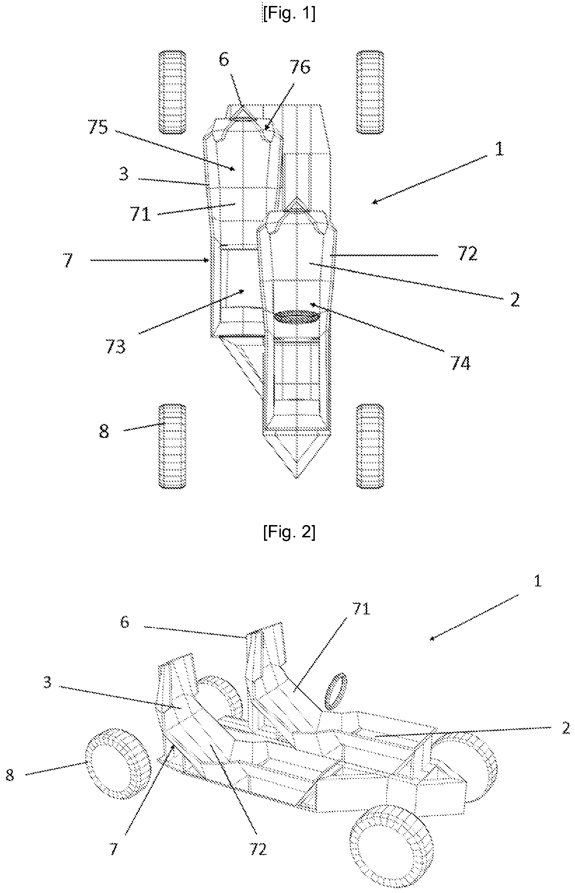

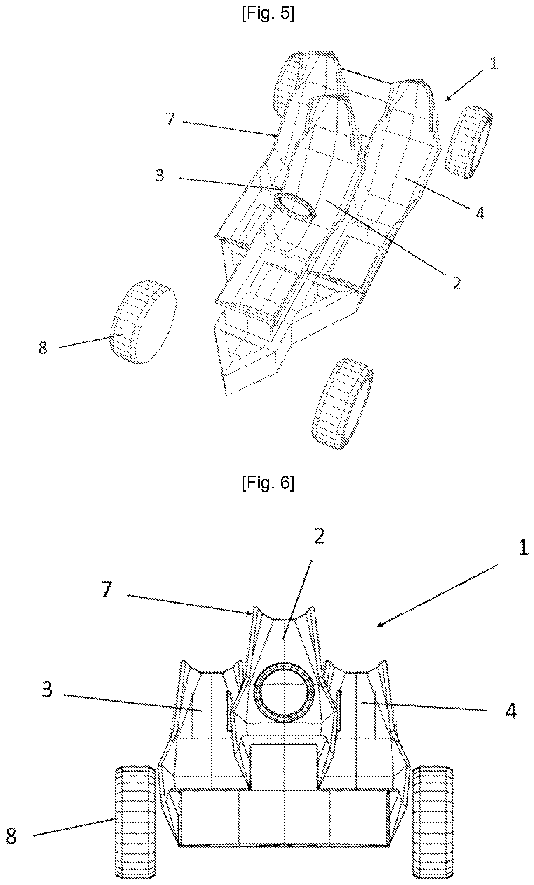

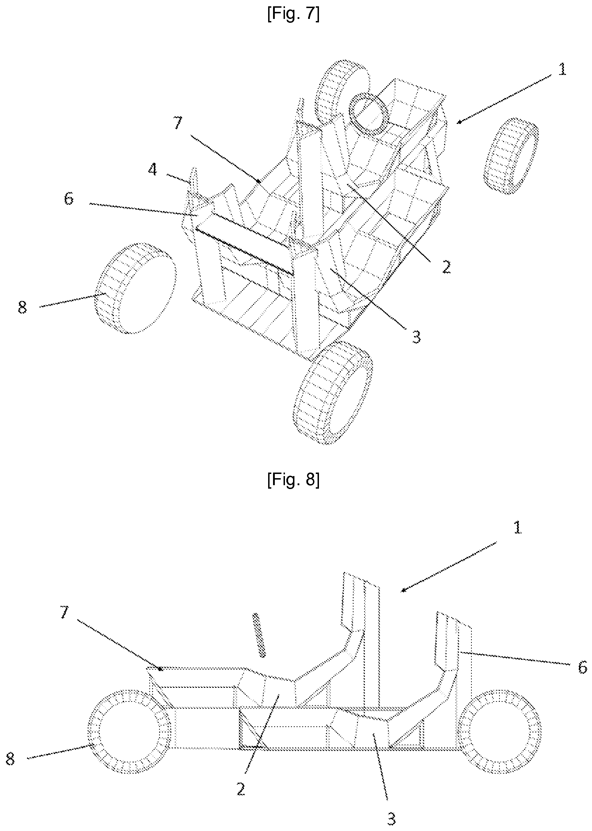

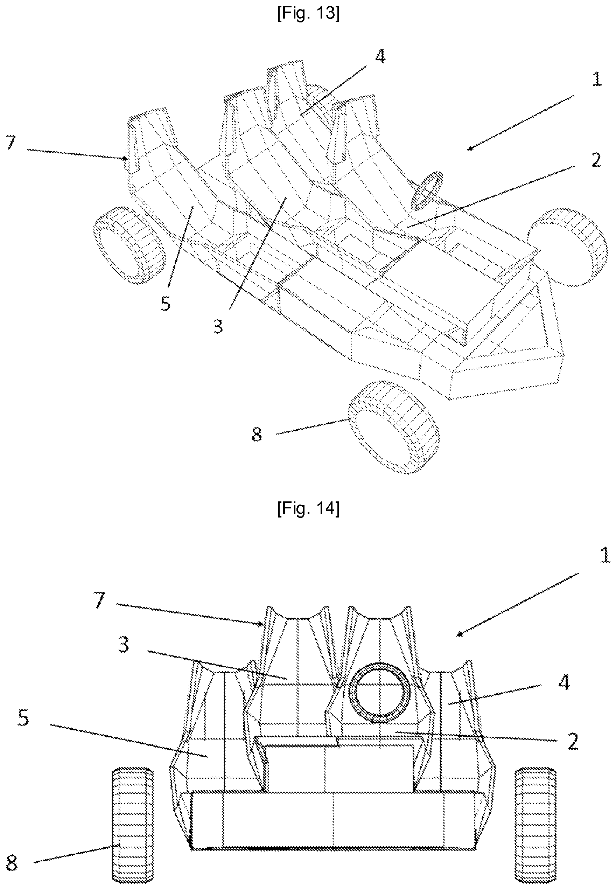

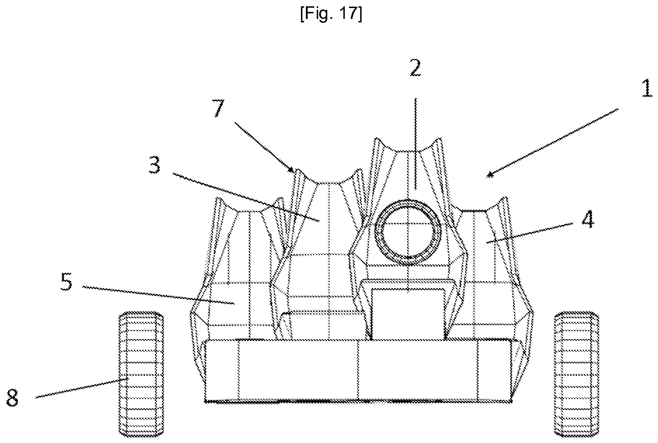

En référence aux figures 1 à 17, la présente invention concerne une structure (1) de sièges pour véhicule automobile définissant un siège conducteur (2) et au moins un siège passager (3), lesdits siège conducteur (2) et siège passager (3) étant décalés et imbriqués l'un par rapport à l'autre selon les trois dimensions.

L'invention vise notamment à réduire le volume d'un véhicule équipé de la structure (1) telle que décrite ci-après, tout en améliorant la sécurité de ses passagers.

La présente invention est une structure (1) pour automobile à 2, 3 ou 4 places, qui se définit par la position des sièges décalés et imbriqués sur les 3 dimensions, à savoir, longueur, largeur et hauteur. Le décalage vertical des structures (1) de sièges permet de rapprocher les sièges et donner à la structure (1) de l'habitacle ainsi réalisé, un volume plus compact.

Pour maximiser les avantages d'une telle structure (1), du point de vue masse, solidité, sécurité des occupants, les sièges avec montants (6) jusqu'au toit, en font partie intégrante. Les espaces des occupants sont délimités par des montants longitudinaux croisés avec des renforts transversaux, ce qui contribue à une structure (1) rigide et protectrice des occupants.

Pour le conducteur, ce sont le volant, les commandes manuelles, ainsi que le pédalier qui sont réglables, mais éventuellement le conducteur pourrait avoir une coque de siège réglable.

La structure (1) comprend des coques (7) définissant les sièges, lesdites coques (7) comprennent des parois latérales (71) et transversales (72) délimitant une zone repose pied (73), une zone d'assise (74), une zone d'appui dorsale (75) et une zone d'appui-tête (76). Les coques sont destinées à recevoir les garnitures des sièges.

Pour une voiture à 2 places, voir figures 1 à 3, le conducteur est décalé en hauteur, en avant et latéralement par rapport au siège passager (3). Selon les pays à conduite à droite ou à gauche, le poste conducteur (2) est décalé à gauche ou à droite.

Ainsi, la structure (1) définit un siège passager décalé par rapport au siège conducteur (2) selon les trois dimensions.

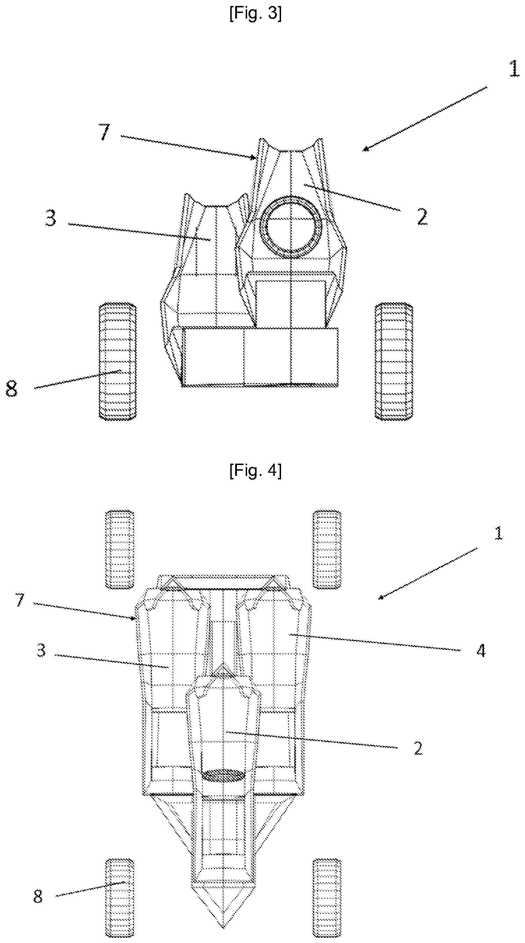

Pour une voiture à 3 places, voir figures 4 à 8, le siège central du conducteur (2) est décalé en hauteur et en avant par rapport aux places des passagers (3, 4), à droite et à gauche, qui sont décalées partiellement sous le siège du conducteur (2). Cette structure (1) à 3 places est adaptée aussi bien à la conduite à droite qu'à la conduite à gauche.

La structure (1) définit ainsi deux sièges passagers (3, 4) décalés par rapport au siège conducteur (2) selon les trois dimensions, lesdits sièges passagers (3, 4) étant alignés en hauteur et en longueur.

Pour une voiture à 4 places, il y a 3 réalisations possibles.

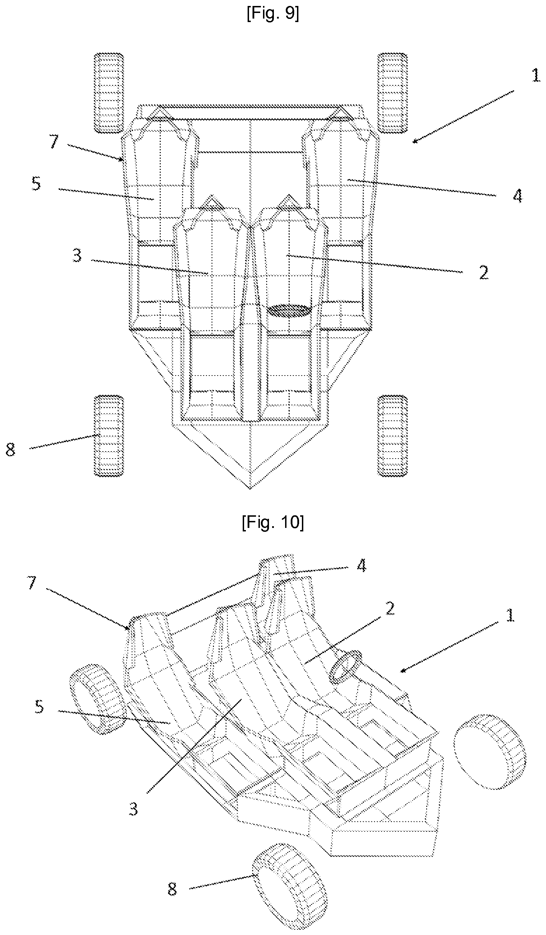

Une première réalisation, voir les figures 9 à 11 avec deux sièges (2, 3) avant côte à côte, les structures de sièges arrière (4, 5) étant décalées selon les 3 dimensions par rapport au bloc des structures de sièges avant (2, 3). Cette version symétrique droite-gauche permet une adaptation du poste conducteur selon les pays à conduite à droite ou à gauche. Cette structure (1) a la plus grande largeur et la plus courte longueur des 3 variantes à 4 places.

Ce mode de réalisation, permet à la structure (1) de définir trois sièges passagers (3, 4, 5), dont un premier siège passager (3) aligné en hauteur et décalé en arrière par rapport au siège conducteur (2). De plus, un deuxième siège passager (4) et un troisième siège passager (5) sont décalés par rapport au siège conducteur (2) et au premier siège passager (3) selon les trois dimensions, et lesdits deuxième (4) et troisième sièges passagers (5) sont alignés l'un par rapport à l'autre en hauteur et en longueur.

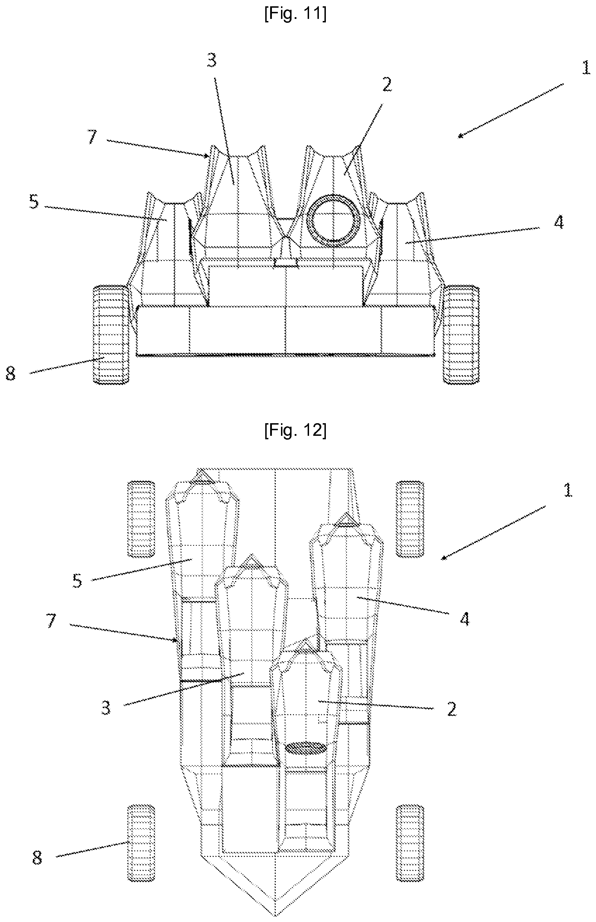

Une deuxième réalisation, voir les figures 12 à 14 avec les structures (1) des deux sièges avant (2, 3), sur le même niveau vertical, et la structure du siège passager (3) avant décalée latéralement et longitudinalement en arrière par rapport au siège conducteur (2), pour obtenir une largeur plus réduite de l'espace des sièges avant. Les structures des sièges arrière (4, 5) sont décalées sur les 3 dimensions par rapport aux structures des sièges avant (2, 3). Cette version asymétrique conduit à réaliser des structures (1) différentes selon les pays à conduite à droite ou à gauche.

Cet autre mode de réalisation de la structure (1) à 4 sièges permet de définir trois sièges passagers (3, 4, 5), dont un premier siège passager (3) aligné en hauteur par rapport au siège conducteur (2). De plus, un deuxième siège passager (4) et un troisième siège passager (5) sont décalés par rapport au siège conducteur (2) et au premier siège passager (3) selon les trois dimensions, et lesdits deuxième (4) et troisième sièges passagers (5) sont alignés l'un par rapport à l'autre en hauteur et en longueur

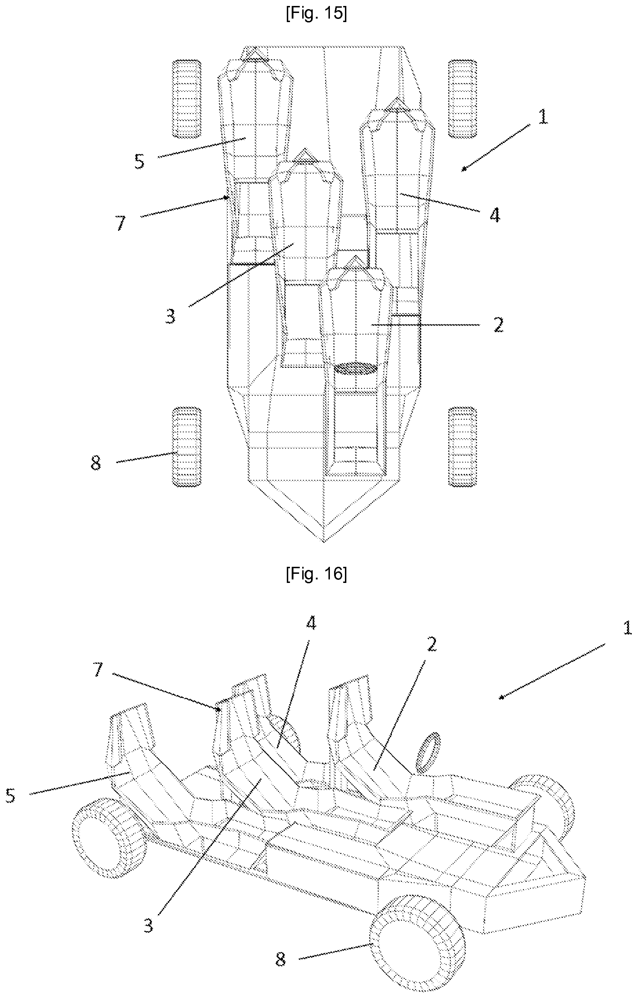

Une troisième réalisation est illustrée aux figures 15 à 17 avec un décalage sur les 3 dimensions de toutes les structures des occupants. Par rapport à la version 3 places, la quatrième place (5) est ajoutée à droite pour les véhicules à conduite à gauche, ou à gauche, pour les véhicules à conduite à droite. Le décalage longitudinal augmenté entre les structures des sièges permet de réduire leur décalage vertical. Cette structure (1) asymétrique pour 4 places à la largeur la plus réduite possible des 3 variantes à 4 places, grâce à l'emboîtement latéral de tous les sièges contigus.

Ce dernier mode de réalisation de la structure (1) permet de définir trois sièges passagers (3, 4, 5), le siège conducteur (2) et les trois sièges passagers (3, 4, 5) étant tous décalés les uns par rapport aux autres selon les trois dimensions.

La structure selon l'invention permet de réaliser un habitacle plus compact grâce à l'imbrication verticale, latérale et longitudinale des structures des sièges, pour un volume réduit par rapport aux automobiles actuelles, et dont la structuration entre et autour des sièges, parties intégrales de la structure (1), procure une solidité accrue, avec une masse et un moment d'inertie plus réduits.

La position plus élevée du conducteur lui procure une vision avant sur une plus longue distance sur des routes avec changements de pente et sa position avancée lui donne un champ visuel latéral maximal, pour de meilleures conditions de sécurité.

La position centrale des places avant, plus éloignées des flancs que dans une structure classique, les met dans une position mieux protégée en cas de choc latéral. Pour les passagers arrière, une visibilité vers l'avant couplée à un grand espace pour allonger les jambes, leur procure un confort amélioré.

Cette forme de structure (1) permet de recevoir une carrosserie avec un SCx, c'est à dire un coefficient de traînée multiplié par la surface frontale exposée à l'air, qui soit minimal, pour une très grande efficacité énergétique.

Dans les versions asymétriques à 4 places, et éventuellement sur les autres structures (1), les roues droites et gauches peuvent être légèrement décalées au lieu d'avoir le même axe, ce qui permet d'améliorer le confort de passage des ralentisseurs transversaux surélevés.

Dans le cas d'une voiture à moteur thermique, le réservoir de carburant sera idéalement positionné au centre de la structure (1), en un endroit très protégé en cas d'accident et dans le cas d'une voiture électrique, le centre de la structure (1) peut loger dans un espace central très protégé, les batteries, de masse importante, en position centrale pour un moment d'inertie réduit.

Le moteur peut aussi bien être positionné à l'avant, à l'arrière, ou dans les roues (8).

La réalisation d'une telle structure (1) pourrait avoir des variantes en matière d'espace habitable en fonction de la corpulence des usagers habituels, selon les populations visées pour optimiser le poids et le SCx de la voiture, et selon la destination routière ou urbaine ou mixte de l'automobile afin de maximiser son efficacité énergétique.

Pour une structure (1) à destination urbaine, l'assise des sièges sera plus haute, le dossier plus vertical, ce qui résultera en un habitacle plus court, une automobile plus haute mais plus courte, ce qui est un avantage en ville pour se garer.

Ainsi, pour une voiture électrique, la structure (1) est plus compacte, plus rigide, plus légère, plus aérodynamique. Nécessitant moins de besoin en puissance, le véhicule peut comprendre un moteur électrique plus léger et moins volumineux, ce qui induit une réduction de la consommation d'énergie, pouvant mener à l'utilisation d'un ensemble de batterie plus léger et plus compact, donc une structure du châssis encore plus compacte et plus légère.

Cette invention permet d'avoir moins besoin de matière première, d'énergie et de main d'œuvre pour construire ce type de structure (1) automobile et permet donc d'en réduire fortement le coût de fabrication et le prix de vente pour rendre les véhicules dérivés, abordables à un plus grand nombre d'automobilistes ou d'organismes de location ou d'usage partagé. Les coûts d'usage d'amortissement et du kilomètre sont réduits ce qui est un progrès économique et écologique rendu possible par ce type de structure (1).

Il ressort de ce qui précède que l'invention fournit bien une structure (1) plus légère, plus compacte et avec une sécurité améliorée pour les passagers, tout en réduisant le coût de fabrication d'une telle structure (1).

## Revendications

1. Structure (1) de sièges pour véhicule comprenant des coques (7) définissant un siège conducteur (2) et au moins un siège passager (3), avec des montants (6) destinés à s'étendre jusqu'à un toit du véhicule automobile et adossés à chaque siège, les coques (7) comprenant des parois latérales (71) et transversales (72) délimitant :
- une zone repose pied (73) ;
- une zone d'assise (74) ;
- une zone d'appui dorsale (75) ;
- une zone d'appui-tête (76) ;
et telle que le siège conducteur (2) et le au moins un siège passager (3) sont décalés et imbriqués l'un par rapport à l'autre selon les trois dimensions, c'est-à-dire décalés en hauteur, largueur et longueur.

2. Structure (1) selon la revendication 1, **caractérisée en ce que** le siège conducteur (2) est surélevé par rapport à l'au moins un siège passager

3. Structure (1) selon l'une des revendications précédentes,
**caractérisée en ce qu'**elle définit deux sièges passagers (3, 4) décalés et imbriqués par rapport au siège conducteur (2) selon les trois dimensions.

4. Structure (1) selon la revendication 3, **caractérisée en ce que** les deux sièges passagers (3, 4) sont alignés en hauteur et en longueur.

5. Structure (1) selon l'une des revendications 1 à 2, **caractérisée en ce qu'**elle définit trois sièges passagers (3, 4, 5), dont :
- un premier siège passager (3) aligné en hauteur et en longueur par rapport au siège conducteur (2) ;
- un deuxième siège passager (4) et un troisième siège passager (5), décalés par rapport au siège conducteur (2) et au premier siège passager (3) selon les trois dimensions, et lesdits deuxième et troisième sièges passagers (4, 5) sont alignés l'un par rapport à l'autre en hauteur et en longueur, les deuxième et troisième sièges passagers sont respectivement imbriqués par rapport au siège conducteur et au premier siège passager.

6. Structure (1) selon l'une des revendications 1 à 2, **caractérisée en ce qu'**elle définit trois sièges passagers (3, 4, 5), dont ;
- un premier siège passager (3) aligné en hauteur et décalé en arrière par rapport au siège conducteur (2) ;
- un deuxième siège passager (4) et un troisième siège passager (5), décalés par rapport au siège conducteur (2) et au premier siège passager (3) selon les trois dimensions, et lesdits deuxième (4) et troisième sièges passagers (5) sont alignés l'un par rapport à l'autre en hauteur et en longueur, le premier siège passager et le deuxième siège passager étant imbriqués dans le siège conducteur, et le troisième siège passager étant imbriqué dans le premier siège passager.

7. Structure (1) selon l'une des revendications 1 à 2, **caractérisée en ce qu'**elle définit trois sièges passagers (3, 4, 5), le siège conducteur (2) et les trois sièges passagers (3, 4, 5) étant tous décalés les uns par rapport aux autres selon les trois dimensions, le premier siège passager et le deuxième siège passager étant imbriqués dans le siège conducteur, et le troisième siège passager étant imbriqué dans le premier siège passager.

8. Véhicule automobile comprenant une structure (1) selon l'une des revendications précédentes.

9. Véhicule selon la revendication 8, **caractérisée en ce qu'**il comprend des roues motorisées (8).

10. Véhicule selon la revendication 9, **caractérisé en ce que** les roues (8) qui se trouvent d'un côté du véhicule sont décalées longitudinalement par rapport aux roues (8) qui se trouvent d'un autre côté du véhicule.

## Patentansprüche

1. Struktur (1) von Sitzen für Fahrzeug, umfassend Schalen (7), die einen Fahrersitz (2) und mindestens einen Beifahrersitz (3) definieren, mit Säulen (6), die sich bis zu einem Dach des Fahrzeugs erstrecken und an jedem Sitz anliegen, wobei die Schalen (7) Seitenwände (71) und Querwände (72) umfassen, die abgrenzen:
- eine Fußstützzone (73);
- eine Sitzfläche (74);
- eine Rückenstützzone (75);
- eine Kopfstützzone (76);
und so, dass der Fahrersitz (2) und der mindestens eine Beifahrersitz (3) versetzt und ineinander verschachtelt in Bezug aufeinander in drei Dimensionen sind, das heißt versetzt in Höhe, Breite und Länge.

2. Struktur (1) nach Anspruch 1, **dadurch gekennzeichnet, dass** der Fahrersitz (2) im Vergleich zu dem mindestens einen Beifahrersitz erhöht ist.

3. Struktur (1) nach einem der vorhergehenden Ansprüche, **dadurch gekennzeichnet, dass** sie zwei Beifahrersitze (3, 4) definiert, die in Bezug auf den Fahrersitz (2) in drei Dimensionen versetzt und ineinander verschachtelt sind.

4. Struktur (1) nach Anspruch 3, **dadurch gekennzeichnet, dass** die zwei Beifahrersitze (3, 4) in Höhe und Länge ausgerichtet sind.

5. Struktur (1) nach einem der Ansprüche 1 bis 2, **dadurch gekennzeichnet, dass** sie drei Beifahrersitze (3, 4, 5) definiert, davon:
- ein erster Beifahrersitz (3) in Höhe und Länge im Vergleich zum Fahrersitz (2) ausgerichtet;
- ein zweiter Beifahrersitz (4) und ein dritter Beifahrersitz (5), versetzt im Vergleich zum Fahrersitz (2) und zum ersten Beifahrersitz (3) in drei Dimensionen, wobei die genannten zweiten und dritten Beifahrersitze (4, 5) in Höhe und Länge zueinander ausgerichtet sind, die zweiten und dritten Beifahrersitze sind jeweils ineinander verschachtelt im Vergleich zum Fahrersitz und zum ersten Beifahrersitz.

6. Struktur (1) nach einem der Ansprüche 1 bis 2, **dadurch gekennzeichnet, dass** sie drei Beifahrersitze (3, 4, 5) definiert, davon:
- ein erster Beifahrersitz (3) in Höhe ausgerichtet und im Vergleich zum Fahrersitz (2) nach hinten versetzt;
- ein zweiter Beifahrersitz (4) und ein dritter Beifahrersitz (5), versetzt im Vergleich zum Fahrersitz (2) und zum ersten Beifahrersitz (3) in drei Dimensionen, wobei die genannten zweiten (4) und dritten Beifahrersitze (5) in Höhe und Länge zueinander ausgerichtet sind, der erste Beifahrersitz und der zweite Beifahrersitz sind ineinander verschachtelt im Fahrersitz, und der dritte Beifahrersitz ist ineinander verschachtelt im ersten Beifahrersitz.

7. Struktur (1) nach einem der Ansprüche 1 bis 2, **dadurch gekennzeichnet, dass** sie drei Beifahrersitze (3, 4, 5) definiert, wobei der Fahrersitz (2) und die drei Beifahrersitze (3, 4, 5) alle in drei Dimensionen versetzt zueinander sind, der erste Beifahrersitz und der zweite Beifahrersitz ineinander verschachtelt im Fahrersitz sind, und der dritte Beifahrersitz ineinander verschachtelt im ersten Beifahrersitz ist.

8. Fahrzeug umfassend eine Struktur (1) nach einem der vorhergehenden Ansprüche.

9. Fahrzeug nach Anspruch 8, **dadurch gekennzeichnet, dass** es motorisierte Räder (8) umfasst.

10. Fahrzeug nach Anspruch 9, **dadurch gekennzeichnet, dass** die Räder (8), die sich auf einer Seite des Fahrzeugs befinden, in Längsrichtung versetzt sind im Vergleich zu den Rädern (8), die sich auf der anderen Seite des Fahrzeugs befinden.

## Claims

1. Structure (1) of vehicle seats comprising shells (7) defining a driver seat (2) and at least one passenger seat (3), with uprights (6) intended to extend up to a roof of the vehicle and backed against each seat, the shells (7) comprising side walls (71) and transverse walls (72) delimiting:
- a footrest zone (73);
- a seating zone (74);
- a backrest zone (75);
- a headrest zone (76);
and such that the driver seat (2) and the at least one passenger seat (3) are staggered and slotted with each other in three dimensions, that is to say staggered in height, width, and length.

2. Structure (1) according to claim 1, **characterized in that** the driver seat (2) is elevated relative to the at least one passenger seat.

3. Structure (1) according to one of the preceding claims, **characterized in that** it defines two passenger seats (3, 4) staggered and slotted relative to the driver seat (2) in three dimensions.

4. Structure (1) according to claim 3, **characterized in that** the two passenger seats (3, 4) are aligned in height and length.

5. Structure (1) according to one of claims 1 to 2, **characterized in that** it defines three passenger seats (3, 4, 5), including:
- a first passenger seat (3) aligned in height and length relative to the driver seat (2);
- a second passenger seat (4) and a third passenger seat (5), staggered relative to the driver seat (2) and the first passenger seat (3) in three dimensions, and the said second and third passenger seats (4, 5) are aligned with each other in height and length, the second and third passenger seats are respectively slotted relative to the driver seat and the first passenger seat.

6. Structure (1) according to one of claims 1 to 2, **characterized in that** it defines three passenger seats (3, 4, 5), including:
- a first passenger seat (3) aligned in height and staggered backward relative to the driver seat (2);
- a second passenger seat (4) and a third passenger seat (5), staggered relative to the driver seat (2) and the first passenger seat (3) in three dimensions, and the said second (4) and third passenger seats (5) are aligned with each other in height and length, the first passenger seat and the second passenger seat being slotted in the driver seat, and the third passenger seat being slotted in the first passenger seat.

7. Structure (1) according to one of claims 1 to 2, **characterized in that** it defines three passenger seats (3, 4, 5), the driver seat (2) and the three passenger seats (3, 4, 5) being all staggered relative to each other in three dimensions, the first passenger seat and the second passenger seat being slotted in the driver seat, and the third passenger seat being slotted in the first passenger seat.

8. Motor vehicle comprising a structure (1) according to one of the preceding claims.

9. Vehicle according to claim 8, **characterized in that** it comprises motorized wheels (8).

10. Vehicle according to claim 9, **characterized in that** the wheels (8) on one side of the vehicle are staggered longitudinally relative to the wheels (8) on the other side of the vehicle.
